# EUROPÄISCHE PATENTANMELDUNG

(11) **EP 4 682 020 A1**
(43) Veröffentlichungstag der Anmeldung: **21.01.2026**
(21) Anmeldenummer: 25184779.4
(22) Anmeldetag: 24.06.2025
(51) Int. Cl.: B62B 3/16, F16B 7/04

(54) **TRANSPORTWAGENSYSTEM MIT STAPELSICHERUNG**

(30) Priorität: 16.07.2024 DE 102024002307
(71) Anmelder: Roozen GmbH, 47638 Straelen (DE)
(72) Erfinder: NERLICH, Michael, 50354 Hürth (DE)
(74) Vertreter: Lenzing Gerber Stute

(57) **Zusammenfassung**

Die Erfindung betrifft ein Transportwagensystem für einen aus Modulelementen zusammengesetzten Transportwagen, insbesondere zum Transport von Pflanzen, mit mindestens einem ersten Transportboden (16), mindestens einem weiteren Modulelement und mindestens einer Stapelsicherung, wobei am ersten Transportboden mehrere Stützhülsen angeordnet sind, von denen mindestens eine erste Hülse (17) einen lichten Querschnitt mit einer Querschnittsverengung aufweist und die Querschnittsverengung von einer Öffnung der ersten Hülse aus hintergreifbar ist, wobei das mindestens eine weitere Modulelement mindestens eine zweite Hülse (20) aufweist, und wobei die Stapelsicherung mit der ersten Hülse des ersten Transportbodens und der zweiten Hülse des weiteren Modulelements zusammenwirkt. Die Stapelsicherung weist einen Befestigungseinsatz (1) und ein damit verbundenes Verlängerungsstück (4) auf, wobei die Stapelsicherung mit dem Befestigungseinsatz in der ersten Hülse verankert ist, wobei zumindest ein Teil des Befestigungseinsatzes die Querschnittsverengung hintergreift, und wobei das mit dem Befestigungseinsatz verbundene Verlängerungsstück ausgebildet ist, in die zweite Hülse eingesetzt zu werden.

## Beschreibung

Die vorliegende Erfindung betrifft ein Transportwagensystem für einen aus Modulelementen zusammengesetzten Transportwagen, insbesondere für einen Transportwagen zum Transport von Pflanzen, mit mindestens einem ersten Transportboden, mindestens einem weiteren Modulelement und mindestens einer Stapelsicherung, wobei am ersten Transportboden mehrere Stützhülsen, insbesondere senkrecht zur Ebene des ersten Transportbodens, angeordnet sind, von denen mindestens eine erste Hülse einen lichten Querschnitt mit einer Querschnittsverengung aufweist und die Querschnittsverengung von einer Öffnung der ersten Hülse aus hintergreifbar ist, wobei das mindestens eine weitere Modulelement mindestens eine zweite Hülse aufweist, und wobei die Stapelsicherung mit der ersten Hülse des ersten Transportbodens und der zweiten Hülse des weiteren Modulelements zusammenwirkt.

Unter der Bezeichnung CC-Container sind modulare Transportwagen bekannt, die beispielsweise im Erwerbsgartenbau oder dem Pflanzenhandel für den Transport und die Lagerung von Pflanzen genutzt werden. Sie sind in Europa als Mehrwegladungsträgersysteme weit verbreitet. Üblicherweise umfassen derartige Transportwagen als ein wesentliches Modulelement einen mit Transportrollen ausgestatteten Wagen mit einem Transportboden. In den vier Ecken des Transportbodens sind im wesentlichen senkrechte Vierkanthohlprofile als Stützhülsen angeordnet. Sie ragen oben und unten über den Transportboden hinaus, wobei die unteren Enden typischerweise pyramidenartig spitz zulaufend ausgebildet sind, indem die Seitenflächen der Vierkanthohlprofile an den unteren Enden dreieckig zugeschnitten und aufeinander zu gebogen sind, wobei die Vierkanthohlprofile an ihrem unteren Ende allerdings nicht geschlossen sind. Pfosten als weitere Modulelemente können je nach Ausführungsform des Containers in die Stützhülsen hineingesteckt werden. In die Pfosten können in variabler Höhe weitere Transportböden für Pflanzen eingehängt werden.

Um beim Transport solcher Transportwagen, beispielsweise in einem LKW, oder bei der Lagerung in einer Lagerhalle, Platz zu sparen, können diese in ihre einzelnen Modulelemente zerlegt werden. Dadurch können mehrere Wagen aufeinandergestapelt werden, wozu die pyramidenartig ausgebildeten unteren Enden der Stützhülsen eines Wagens in die oberen Enden der Stützhülsen eines darunter liegenden Wagens eingesteckt werden. Problematisch dabei ist jedoch, dass eine Stützhülse mit ihrem unteren Ende aufgrund von nutzungsbedingten Verformungen oder Fertigungstoleranzen möglicherweise nicht vollständig in die darunter angeordnete Stützhülse eingreift. Es kann daher vorkommen, dass bei einer Krafteinwirkung, beispielsweise dem Transport mehrerer aufeinandergestapelter Wagen über einen unebenen Boden oder durch das Anziehen eines Transportgurtes in einem LKW ein Wagen mit seiner Stützhülse aus der Stützhülse des darunter liegenden Wagens herausrutscht. Der Wagenstapel kann dann verrutschen oder kollabieren, wodurch nicht nur die Wagen beschädigt werden können, sondern auch eine erhebliche Gefahr für umliegende Personen und Gegenstände besteht. Diese Gefahr wird umso größer, je höher der Wagenstapel ist.

Das gleiche Problem besteht, wenn zwei oder mehrere CC-Container für den Transport von beispielsweise Pflanzen aufeinandergesetzt werden, um eine Art rollendes Regal mit mehreren Böden zu bilden. Dabei wird ein Wagen mit den unteren Enden seiner Stützhülsen in die oberen Enden von Pfosten eingesetzt werden, die in die Stützhülsen eines darunter angeordneten Wagens eingesetzt sind.

Als Lösung für das Problem ist aus der EP 3 470 298 B1 eine Stapelsicherung bekannt. Die Stapelsicherung weist einen Hülsenkörper auf, der oben auf einen Pfosten oder das obere Ende einer Stützhülse eines unteren Wagens aufgeschoben und in den das untere Ende einer Stützhülse eines oberen Wagens eingesetzt werden kann, wobei im Hülsenkörper Schulterflächen als Anschläge für die in den Hülsenkörper eingreifenden Pfosten und/oder Stützhülsen vorgesehen sind und die Stapelsicherung sowohl das obere Ende des Pfostens bzw. der Stützhülse des unteren Wagens als auch das untere Ende der Stützhülse des oberen Wagens in Umfangsrichtung umschließt.

Aus der DE 20 2005 013 047 ist eine Lagerungsvorrichtung bekannt, die einen reduzierten Platzbedarf haben soll. Dazu sind am unteren Ende der Stützhülse einer Lagerungsplattform ein erstes Zentriermittel zum Zusammenwirken mit dem oberen Ende einer Stützhülse einer weiteren Lagerungsplattform und ein zweites Zentriermittel zum Zusammenwirken mit einem oberen Ende einer Tragstange, die zwischen den Stützhülsen zweier Lagerungsplattformen eingesetzt werden kann, ausgebildet ist. Beide Zentriermittel sind fest mit der Stützhülse verbunden, beispielsweise verschweißt.

Aufgabe der vorliegenden Erfindung ist es, ein Transportwagensystem mit einer in ihrer Funktionalität verbesserten Stapelsicherung bereitzustellen.

Diese Aufgabe wird mit einem Transportwagensystem der eingangs genannten Art gemäß Anspruch 1 dadurch gelöst, dass die Stapelsicherung einen Befestigungseinsatz und ein damit verbundenes Verlängerungsstück aufweist, wobei die Stapelsicherung in der ersten Hülse verankert ist, wobei zumindest ein Teil des Befestigungseinsatzes die Querschnittsverengung hintergreift, und wobei das mit dem Befestigungseinsatz verbundene Verlängerungsstück ausgebildet ist, in die zweite Hülse eingesetzt zu werden.

Das erfindungsgemäße Transportwagensystem dient dem Aufbau und der Lagerung eines modularen Transportwagens wie beispielsweise einem CC-Container und ist vorzugsweise für den Transport von Pflanzen dimensioniert.

Am ersten Transportboden sind mehrere Stützhülsen vorgesehen, die wie die Stützhülsen der eingangs beschriebenen CC-Container ausgestaltet sein können, aber nicht müssen. Bei den pyramidenförmig spitz zulaufenden unteren Enden der Stützhülsen herkömmlicher CC-Container, die alle ersten Hülsen im vorliegenden Sinne sind, bilden bereits die aufeinander zu gebogenen Profilenden eine Querschnittsverengung, die sowohl vom oberen Ende als auch vom unteren Ende der Hülse hintergreifbar ist. Es ist aber beispielsweise ebenso denkbar, dass alternativ oder in Ergänzung dazu zwischen den Enden der ersten Hülsen ein Bereich mit verengtem lichtem Querschnitt vorgesehen ist, z.B. eine an der Innenwand der Hülse umlaufende Wulst in einem unteren Bereich der Hülse. Damit die Querschnittsverengung hintergreifbar ist, ist die Hülse mindestens an einem Ende, vorzugsweise im montierten Zustand eines Transportwagens des erfindungsgemäßen Transportwagensystems an einem unteren Ende und praktischerweise an einem oberen und unteren Ende, offen.

Eine Stapelsicherung kann auf unterschiedliche Arten in einer ersten Hülse des Systems verankert sein. Beispielsweise können der Befestigungseinsatz und das Verlängerungsstück derart miteinander verbunden sein, dass die Querschnittsverengung der ersten Hülse zwischen dem Befestigungseinsatz und dem Verlängerungsstück eingeklemmt ist. Das bietet sich insbesondere an, wenn das untere Ende der ersten Hülse wie bei den Wagen der herkömmlichen CC-Container unten pyramidenförmig spitz zuläuft, wobei dann der Befestigungseinsatz innerhalb der Hülse auf den spitz zulaufenden Seitenflächen des Hülsenprofils aufsitzt und das Verlängerungsstück über Verbindungsmittel außen an dem Hülsenende anliegt. Alternativ ist beispielsweise bei einer Hülse mit innen umlaufender Wulst denkbar, den Befestigungseinsatz aus einem Elastomer mit einem Querschnitt auszubilden, der dem Hohlraumquerschnitt der Hülse entspricht, und mit einer umlaufenden Nut, die der Form der Wulst entspricht. Ein solcher Befestigungseinsatz könnte in die Hülse eingeführt und soweit über die Wulst geschoben werden, bis sie in der Nut des Befestigungseinsatzes sitzt und der Befestigungseinsatz durch die Wulst gegen ein Herausrutschen aus der Hülse gesichert ist. Eine andere Alternative besteht darin, den Befestigungseinsatz in der Art eines Spreizdübels auszubilden, wobei dann ein aufspreizbarer Teil des Befestigungseinsatzes in nicht aufgespreiztem Zustand durch den Bereich der Querschnittsverengung von einer Öffnung der ersten Hülse hindurchgeschoben wird und danach aufgespreizt wird, so dass der Befestigungseinsatz die Querschnittsverengung dann hintergreift.

Das mit dem Befestigungseinsatz verbundene Verlängerungsstück kann so ausgebildet sein, dass es, wenn es in die zweite Hülse des weiteren Modulelements eingesetzt ist, eine besonders gute Sicherung der gestapelten Modulelemente bietet. So kann der Außenquerschnitt des Verlängerungsstücks an den Innenquerschnitt der Öffnung der zweiten Hülse, in die es eingesetzt werden soll, angepasst sein. Alternativ oder in Ergänzung dazu kann das Verlängerungsstück vergleichsweise lang ausgebildet sein, so dass es weit in die zweite Hülse eingreift.

Der Befestigungseinsatz und das Verlängerungsstück der Stapelsicherung können einstückig ausgebildet sein. Beispielsweise können der Befestigungseinsatz und das Verlängerungsstück aus einem im Wesentlichen formstabilen Elastomer bestehen, wobei das Elastomer dann so verformbar sein muss, dass der Befestigungseinsatz in die erste Hülse so weit eingeschoben werden kann, bis er zumindest teilweise die Querschnittsverengung hintergreift und der Befestigungseinsatz dadurch in der ersten Hülse verankert ist.

Vorzugsweise ist die Stapelsicherung mit Verlängerungsstück und Befestigungseinsatz aber zweiteilig ausgeführt und Befestigungseinsatz und Verlängerungsstück lösbar miteinander verbunden. Dadurch kann beispielsweise erreicht werden, dass der Befestigungseinsatz von einer Öffnung an einem Ende der ersten Hülse in Richtung Querschnittsverengung eingeführt werden kann, während das Verlängerungsstück vom anderen Ende der ersten Hülse her an die Querschnittsverengung angelegt und beide Teile dann miteinander verbunden werden können.

Eine einfache Verbindung zwischen Befestigungseinsatz und Verlängerungsstück kann beispielsweise eine Verschraubung sein. Als Alternative hierzu kommt ein Lamellenelement in Betracht, das mehrere in Längsrichtung voneinander beabstandete Lamellen aufweist. Das Lamellenelement kann insbesondere als Lamellendübel ausgebildet sein. Ferner weist das Verbindungsmittel in dieser Ausführungsform eine mit dem Lamellenelement zusammenwirkende Lamellenaufnahme mit einem senkrecht zur Längsrichtung spreizbarem Querschnitt auf, sodass ein Form- und/oder Kraftschluss zwischen der Lamellenaufnahme und dem Lamellenelement ausbildbar oder ausgebildet ist. Insbesondere sind in der Öffnung zwei, vorzugsweise halbkreisförmige, Spreizelemente gegenüberliegend zueinander angeordnet. Im Prinzip ist es egal, ob das Lamellenelement am Befestigungseinsatz und die Lamellenaufnahme am Verlängerungsstück angeordnet ist oder umgekehrt das Lamellenelement am Verlängerungsstück und die Lamellenaufnahme am Befestigungseinsatz. In noch einer anderen Ausführungsform umfasst das Verbindungsmittel ein zumindest teilweise elastisch verformbares Rastelement. Insbesondere weist das Rastelement zwei gegenüberliegend angeordnete und senkrecht zur Längsrichtung voneinander beabstandete Haken auf, wobei die Haken jeweils einen Bogen oder eine Kehle aufweisen können, die in entgegengesetzter Richtung zueinander ausgerichtet sind. Ferner umfasst das Verbindungsmittel in dieser Ausführungsform eine Rastelementaufnahme derart, dass das Rastelement in die Rastelementaufnahme eingreifen und hinter einer Wandung der Rastelementaufnahme eingreifen und verrasten kann. Auch bei dieser Ausführungsform ist es egal, ob das Rastelement am Befestigungseinsatz und die Rastelementaufnahme am Verlängerungsstück vorgesehen ist oder umgekehrt.

Sind Befestigungseinsatz und Verlängerungsstück voneinander lösbar, kann der Querschnitt des Befestigungseinsatzes an die Innenkontur der ersten Hülse angepasst sein und ist in seiner Formgebung nicht durch die Größe der lichten Öffnung im Bereich der Querschnittsverengung beschränkt. Außerdem lässt sich ein Befestigungseinsatz mit einer Vielzahl unterschiedlicher Verlängerungsstücke verbinden, die an zweite Hülsen unterschiedlicher weiterer Modulelemente beispielsweise in ihrer Länge und/oder ihrem Querschnitt angepasst sein können.

Nicht alle Stützhülsen des ersten Transportbodens müssen eine Querschnittsverengung zur Aufnahme einer Stapelsicherung aufweisen, vielmehr reicht bereits eine einzige Stützhülse mit einer Querschnittsverengung auf, um bereits einen Sicherungseffekt zu erzielen. Unabhängig davon ist es bevorzugt, wenn mindestens zwei und vorzugsweise alle Stützhülsen als erste Hülsen mit einer Querschnittsverengung ausgebildet sind.

Als weiteres Modulelement ist hier insbesondere ein zweiter Transportboden zu nennen, der zu dem ersten im Wesentlichen identisch sein kann. In dem Fall dient die Stapelsicherung dem Stapeln einzelner Transportböden, wenn beispielsweise möglichst viele Transportwagen in demontiertem Zustand zu einem Pflanzenproduzenten transportiert werden sollen. Eines oder mehrere zweite Modulelemente können auch ein oder mehrere Pfosten sein, deren obere Enden als Hülsen ausgebildet und beispielsweise Bestandteil eines unteren Transportwagens sind, auf den ein Transportboden aufgesetzt werden soll.

Aus dem Gesamtzusammenhang ergibt sich, dass die Transportböden sinnvollerweise mit Transportrollen ausgestattet sind. Das ist für die Funktionalität des Transportwagensystems allerdings nicht zwingend notwendig.

Die Stapelsicherung des erfindungsgemäßen Transportwagensystems bietet gegenüber der vorbekannten, einen Hülsenkörper aufweisenden Stapelsicherung ganz wesentliche Vorteile. Zum einen kann sie fest mit der ersten Hülse eines ersten Transportbodens verbunden werden, so dass sie bei der Demontage eines Transportwagens nicht verloren geht. Zum anderen wird dadurch, dass die Stapelsicherung fest mit der ersten Hülse eines Transportbodens verbunden ist, das Ende der ersten Hülse, in dem die Stapelsicherung sitzt, gegen Schäden oder Verschleiß durch äußere Einwirkung geschützt. Während die Reparaturen von Schäden an der ersten Hülse, die durch äußere Einwirkung entstanden sind, aufwändig sein können, sind Schäden, die stattdessen an der Stapelsicherung entstehen, durch einen einfachen Austausch der Stapelsicherung günstig und schnell zu beheben. Auch sind verschlissene Stapelhülsen leicht gegen neue zu ersetzen.

Außerdem besteht der ganz wesentliche Vorteil eines geringeren Platzbedarfs. So weist die vorbekannte Stapelsicherung eine Hülsenkontur auf, die ausgebildet ist, sowohl das untere Ende einer Stützhülse als auch das obere Ende eines Pfostens aufzunehmen. Damit steht die vorbekannte Stapelsicherung seitlich über die in den Ecken angeordneten Stützhülsen über und vergrößert so die äußeren Abmaße des CC-Containers, und zwar nicht nur an einer Ecke, sondern an allen vier Ecken des CC-Containers. Da CC-Container in ihren Abmaßen (ohne Stapelsicherungen) auf die Ladeflächen von Transportern abgestimmt sind, ergibt sich daraus regelmäßig das Problem, dass beim Transport von mithilfe der bekannten Stapelsicherungen gestapelten CC-Containern in einem Ladenraum eines LKWs entweder weniger CC-Container mitgeführt werden können oder diese nur unter hohem Kraftaufwand in einen eigentlich zu kleinen Laderaum gezwängt werden müssen. Dadurch können Schäden an den CC-Containern, einzelnen Modulelementen der CC-Container im Laderaum oder auch am Laderaum selbst entstehen. Bei dem erfindungsgemäßen Transportwagensystem hingegen erfolgt die Sicherung nicht durch eine Umhüllung von außen, sondern von innen, da die Stapelsicherung zumindest im Wesentlichen innerhalb der ersten und zweiten Hülsen angeordnet ist.

In einer bevorzugten Ausgestaltung der Erfindung ist der Befestigungseinsatz vollständig innerhalb der ersten Hülse und das Verlängerungsstück vollständig außerhalb der ersten Hülse angeordnet. Dies ist beispielsweise dann der Fall, wenn der Transportboden der eines Wagens eines CC-Containers ist, dessen Stützhülsen unten pyramidenförmig spitz zulaufen. Bei diesen Stützhülsen kann das Befestigungsstück von oben in die Stützhülse eingesetzt werden, so dass es innerhalb der Stützhülse auf dem pyramidenförmigen Ende aufliegt. Das Verlängerungsstück wird dann von unten an das untere pyramidenförmige Ende der Stützhülse angesetzt, und der Befestigungseinsatz und das Verlängerungsstück können dann beispielsweise miteinander verschraubt oder auf andere Weise miteinander verbunden werden.

In einer Ausführungsform sind eine Außenkontur des Befestigungseinsatzes und eine Innenkontur des Verlängerungsstücks derart korrespondierend zueinander ausgebildet, dass der Befestigungseinsatz in das Verlängerungsstück eingreifen kann. Durch diesen Formschluss können Relativbewegungen zwischen dem Befestigungseinsatz und dem Verlängerungsstück unterbunden werden.

In einer weiteren Ausführungsform weist zumindest ein Abschnitt des Befestigungseinsatzes eine Außenkontur auf, die im Wesentlichen einer Innenkontur der ersten Hülse im Bereich der Querschnittsverengung entspricht und vorzugsweise rechteckig oder quadratisch ist. Dadurch ist die Position des Befestigungseinsatzes in der ersten Hülse eindeutig definiert, und der Befestigungseinsatz kann, ist die Stapelsicherung einmal in der ersten Hülse verankert, nicht mehr ohne weiteres verrutschen. Ist die Außenkontur gleichzeitig drei- oder mehreckig und insbesondere, wie bei den Stützhülsen der herkömmlichen CC-Container, quadratisch, ist der Befestigungseinsatz gleichzeitig gegen ein Verdrehen um eine Längsachse der Hülse gesichert.

Bevorzugt verjüngt sich die Außenkontur des Befestigungseinsatzes zumindest innerhalb eines Abschnitts in Richtung der Einsetzrichtung, wobei der Befestigungseinsatz an seinem in Einsetzrichtung vorderen Ende vorzugsweise die Form eines Pyramidenstumpfes hat. Damit ist der Befestigungseinsatz besonders gut für die Verwendung in Stützhülsen herkömmlicher CC-Container oder Container mit ähnlichen Stützhülsen geeignet. Durch die sich verjüngende Kontur kann sich der Befestigungseinsatz bei entsprechend ausgebildeter erster Hülse während der Montage innerhalb der ersten Hülse selbst zentrieren.

In einer Ausführungsform weist das Verlängerungsstück an seinem dem Befestigungseinsatz zugewandten Ende eine Innenkontur auf, die im Wesentlichen zumindest einem Teil einer Außenkontur des Befestigungseinsatzes und/oder eines der zweiten Hülse zugewandten Endes der ersten Hülse entspricht. Entspricht die Innenkontur beispielsweise dem Gegenstück eines Pyramidenstumpfes, entspricht seine Form dem unteren Ende der Stützhülse des Wagens eines herkömmlichen CC-Containers. Wird das Verlängerungsstück mit dem in der ersten Hülse verankerten Befestigungselement verbunden und liegt sie dann formschlüssig an der Unterseite der ersten Hülse an, ist es gegen ein seitliches Verrutschen oder gegen ein Verdrehen gesichert.

In einer weiteren Ausführungsform weist das Verlängerungsstück insbesondere in einem ersten Verlängerungsstückabschnitt eine Außenkontur auf, die sich zumindest teilweise in Richtung zum Einsetzen und/oder Eingreifen in die zweite Hülse verjüngt, so dass es sich beim Einsetzen in eine zweite Hülse eines weiteren Modulelements selbst zentriert und gegebenenfalls darin sogar verkeilen kann. Bevorzugt weist das Verlängerungsstück in dem ersten Verlängerungsstückabschnitt die Form eines Pyramidenstumpfes auf.

In einer weiteren Ausführungsform des erfindungsgemäßen Transportwagensystems weist das Verlängerungsstück einen zweiten Verlängerungsstückabschnitt auf, der dem ersten Verlängerungsstückabschnitt in der Richtung zum Einsetzen in die zweite Hülse nachgeordnet ist. Insbesondere ist ein maximales Außenmaß des zweiten Verlängerungsstückabschnittes senkrecht zur Längsrichtung geringer als eine lichte Weite der zweiten Hülse. Auf diese Weise kann das Verlängerungsstück noch weiter in die zweite Hülse eingreifen, sodass es noch sicherer mit dieser verbunden werden kann und insbesondere das Risiko eines Kippens von aufeinander gestapelten Transportwagen (wie z.B. CC-Containern) oder Transportböden weiter reduziert wird. Vorzugsweise gehen der erste Verlängerungsstückabschnitt und der zweite Verlängerungsstückabschnitt ineinander über. Insbesondere weist das Verlängerungsstück im zweiten Verlängerungsstückabschnitt entlang der Längsrichtung eine gleichbleibende Außenkontur auf. Die Außenkontur des Verlängerungsstückabschnittes ist insbesondere in einer zur Längsrichtung senkrechten Ebene im Wesentlichen rund, vorzugsweise kreisförmig, ausgebildet. Grundsätzlich sind jedoch auch andere Formen denkbar, beispielsweise rechteckige oder quadratische. Insbesondere sind an der Außenkontur des zweiten Verlängerungsstückabschnittes mehrere sich in Längsrichtung erstreckende und voneinander beabstandete Rillen ausgebildet. Die Rillen können einer Formstabilisierung des Verlängerungsstücks in dem zweiten Verlängerungsstückabschnitt sowie einem verbesserten Halt in der zweiten Hülse dienen.

In einer weiteren Ausführungsform weist der Befestigungseinsatz mindestens ein längliches Kippschutzelement auf. Bevorzugt weist der Befestigungseinsatz mindestens zwei Kippschutzelemente auf, wobei die Kippschutzelemente insbesondere senkrecht zu einer Einsetzrichtung des Befestigungseinsatzes voneinander beabstandet angeordnet sind. Das Kippschutzelement steht in oder entgegen der Einsetzrichtung vom Befestigungseinsatz ab und soll verhindern, dass der Befestigungseinsatz während des Einsetzens in die erste Hülse vor Erreichen einer Verankerungsposition kippt und dann nur noch schlecht innerhalb der ersten Hülse in die gewünschte Position gebracht werden kann. Das Kippschutzelement ist vorzugsweise bogenförmig ausgeführt.

In einer weiteren Ausführungsform des erfindungsgemäßen Transportwagensystems umfasst die Stapelsicherung eine Schutzhülse. Die Schutzhülse ist vorgesehen, um an dem in Längsrichtung oberen Ende der zweiten Hülse befestigt zu werden und dieses insbesondere abzudecken, sodass scharfe Kanten oder Ecken der zweiten Hülsen, seien sie Bestandteil einer Stützhülse eines Transportbodens oder eines Pfostens, abgedeckt sind, sodass sich Personen an diesen nicht verletzen. Vorzugsweise sind eine Innenkontur eines Hohlraums der Schutzhülse und eine Außenkontur des Verlängerungsstücks derart zueinander korrespondierend ausgebildet, dass das Verlängerungsstück passgenau in die Schutzhülse eingesetzt werden kann. Durch das Einsetzen des Verlängerungsstücks in die Schutzhülse kann das Verlängerungsstück noch besser mit der zweiten Hülse verbunden werden.

Die Schutzhülse kann entlang des Hohlraums eine sich in Richtung zum Einsetzen des Verlängerungsstücks in die Schutzhülse verjüngende Innenkontur aufweisen. Durch die sich verjüngende Innenkontur kann insbesondere eine verbesserte Keil- und Zentrierwirkung zwischen Verlängerungsstück und Schutzhülse erreicht werden. Vorzugsweise weist die Schutzhülse zumindest teilweise, insbesondere vollständig, entlang ihrer Längserstreckung eine in einer zur Längsrichtung senkrechten Ebene rechteckeckige, insbesondere quadratische Außenkontur und/oder Innenkontur auf. In einer weiteren Ausführungsform ist an mindestens einer äußeren Wand der Schutzhülse, vorzugsweise an allen äußeren Wänden der Schutzhülse, zumindest eine Lamelle, vorzugsweise mehrere in einem Abstand zueinander angeordnete Lamellen, angeordnet. Die Lamelle dient bei befestigter Schutzhülse der Verbesserung eines Halts zwischen der äußeren Wand und der zweiten Hülse, sodass die Schutzhülse sicherer in der zweiten Hülse sitzt. Insbesondere weist die Schutzhülse einen, insbesondere senkrecht zur Längsrichtung umlaufenden, Kragen auf, mit dem sie im eingesteckten Zustand an einer Öffnung der zweiten Hülse, insbesondere an einer Öffnung an einem in Längsrichtung oberen Ende der zweiten Hülse, anliegen kann. Bevorzugt bildet der Kragen eine Auflagefläche aus, mit der dieser an der Öffnung der zweiten Hülse anliegt. Die Schutzhülse kann beispielsweise mittels einer Presspassung an der zweiten Hülse befestigt werden. Denkbar ist jedoch auch, dass die Schutzhülse mittels eines Befestigungselements, beispielsweise einer Schraube und/oder einer Niete befestigt wird.

Es kann passieren, dass gestapelte Transportböden, insbesondere mit jeweils mehr als einer Hülse, nicht sicher aufeinander stehen, da mindestens eine der ersten und/oder zweiten Hülsen eine unterschiedliche Länge in Längsrichtung zu den übrigen Hülsen aufweist. Zur Behebung dieses Problems kann die Stapelsicherung in einer weiteren Ausführungsform des erfindungsgemäßen Transportwagensystems ein Ausgleichsmittel aufweisen, das eben dazu dient, etwaige Längenunterschiede auszugleichen. Die Außenkontur des Ausgleichsmittels und die Innenkontur der zweiten Hülse und/oder der Schutzhülse sind derart korrespondierend zueinander ausgeführt, dass das Ausgleichsmittel in die zweite Hülse und/oder in die Schutzhülse eingesetzt werden kann. Insbesondere weist das Ausgleichsmittel zumindest einen ersten Ausgleichsmittelabschnitt und einen in einer Richtung zum Einsetzen in die zweite Hülse und/oder Schutzhülse beabstandeten zweiten Ausgleichsmittelabschnitt auf. Das Ausgleichsmittel kann insbesondere mit dem zweiten Ausgleichsmittelabschnitt, vorzugsweise vollständig, in die zweite Hülse und/oder die Schutzhülse eingesetzt werden. Vorzugweise ist an einem Übergang zwischen erstem Ausgleichsmittelabschnitt und zweitem Ausgleichsmittelabschnitt ein Kragen ausgebildet, mit dem das Ausgleichsmittel an einer Öffnung der zweiten Hülse und/oder der Schutzhülse anliegen kann. Insbesondere weist der erste Ausgleichsmittelabschnitt dazu in einer zur Längsrichtung senkrechten Ebene ein größeres maximales Außenmaß als der zweite Ausgleichsmittelabschnitt auf. Bevorzugt weist das Ausgleichsmittel in Längsrichtung einen Hohlraum auf, wobei eine Innenkontur des Hohlraums und eine Außenkontur des Verlängerungsstücks derart korrespondierend zueinander ausgeführt sind, dass das Verlängerungsstück in den Hohlraum eingesetzt werden kann. Insbesondere verjüngt sich eine Innenkontur des Hohlraums in einer Richtung zum Einsetzen des Verlängerungsstücks in das Ausgleichsmittel. Die Verjüngung führt vorteilhaft zu einer größeren Keilwirkung und einer sichereren Verbindung von Verlängerungsstück und Ausgleichsmittel.

Befestigungseinsatz, das Verlängerungsstück, die Schutzhülse und/oder das Ausgleichsmittel sind vorzugsweise aus Kunststoff.

Im Folgenden wird die Erfindung anhand von Figuren, in denen bevorzugte Ausführungsbeispiele der Erfindung dargestellt sind, näher erläutert.

Es zeigen
- Fig. 1a und 1b: eine Seitenansicht und eine Draufsicht eines Befestigungseinsatzes einer Stapelsicherung eines erfindungsgemäßen Transportwagensystems;
- Fig. 2a und 2b: eine Seitenansicht und eine Draufsicht eines Verlängerungsstücks einer Stapelsicherung eines erfindungsgemäßen Transportwagensystems;
- Fig. 3a und 3b: inen Längsschnitt und eine Draufsicht einer Schutzhülse einer Stapelsicherung eines erfindungsgemäßen Transportwagensystems;
- Fig. 4a und 4b: Seitenansichten von Teilen eines erfindungsgemäßen Transportwagensystems mit Stapelsicherung;
- Fig. 5a und 5b: eine Seitenansicht eines Befestigungseinsatzes und eine Draufsicht eines dazu passenden Verlängerungsstücks einer zweiten Ausführung der erfindungsgemäßen Stapelsicherung;
- Fig. 6a und 6b: eine Seitenansicht eines Befestigungseinsatzes und eine Draufsicht von unten eines dazu passenden Verlängerungsstücks einer dritten Ausführung der erfindungsgemäßen Stapelsicherung;
- Fig. 7a und b: zwei Seitenansichten eines Befestigungseinsatzes mit Kippschutzelementen einer vierten Ausführung der erfindungsgemäßen Stapelsicherung;
- Fig. 8a und b: eine Seitenansicht und eine Draufsicht eines Ausgleichsmittels einer Stapelsicherung eines erfindungsgemäßen Transportwagensystems.

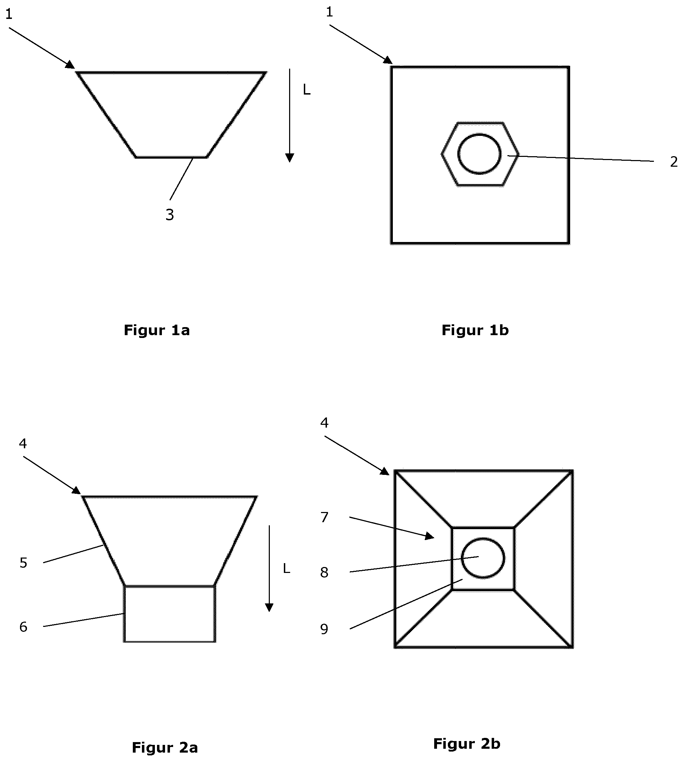

Die Figuren 1a und 1b zeigen einen Befestigungseinsatz 1 einer ersten Ausführungsform einer Stapelsicherung eines erfindungsgemäßen Transportwagensystems. Wie insbesondere durch die Zusammenschau der Figuren 1a und 1b deutlich wird, hat der Befestigungseinsatz 1 die Form eines Pyramidenstumpfes mit quadratischer Grundfläche und einer sich in Längsrichtung L stetig verjüngenden Außenkontur. Wie in Figur 1b zu sehen ist, ist in der Mitte der Oberseite des Befestigungseinsatzes 1 eine Mutter 2 angeordnet. Der Befestigungseinsatz 1 weist ein zentrales Durchgangsloch auf, so dass eine Schraube von seiner Unterseite 3 aus in den Befestigungseinsatz 1 eingesetzt und in die Mutter 2 eingeschraubt werden kann.

In den Figuren 2a und 2b ist ein Verlängerungsstück 4 der ersten Ausführungsform der Stapelsicherung des erfindungsgemäßen Transportwagensystems dargestellt. Das Verlängerungsstück 4 weist einen ersten Verlängerungsstückabschnitt 5 und einen sich in Längsrichtung L anschließenden zweiten Verlängerungsstückabschnitt 6 auf. Das Verlängerungsstück 4 ist als Hohlkörper ausgebildet. Wie insbesondere durch die Zusammenschau der Figuren 2a und 2b deutlich wird, hat der erste Verlängerungsstückabschnitt 5 die äußere Kontur eines Pyramidenstumpfes mit quadratischer Grundfläche, der sich in Längsrichtung L verjüngt. Der erste Verlängerungsstückabschnitt 5 definiert einen Hohlraum 7, der ebenso pyramidenstumpfartig ist. Der sich daran anschließende, sich in Längsrichtung erstreckende zweite Verlängerungsstückabschnitt 6 hat demgegenüber einen konstanten, quadratischen Querschnitt und ein zentrales Durchgangsloch 8 für eine Schraube.

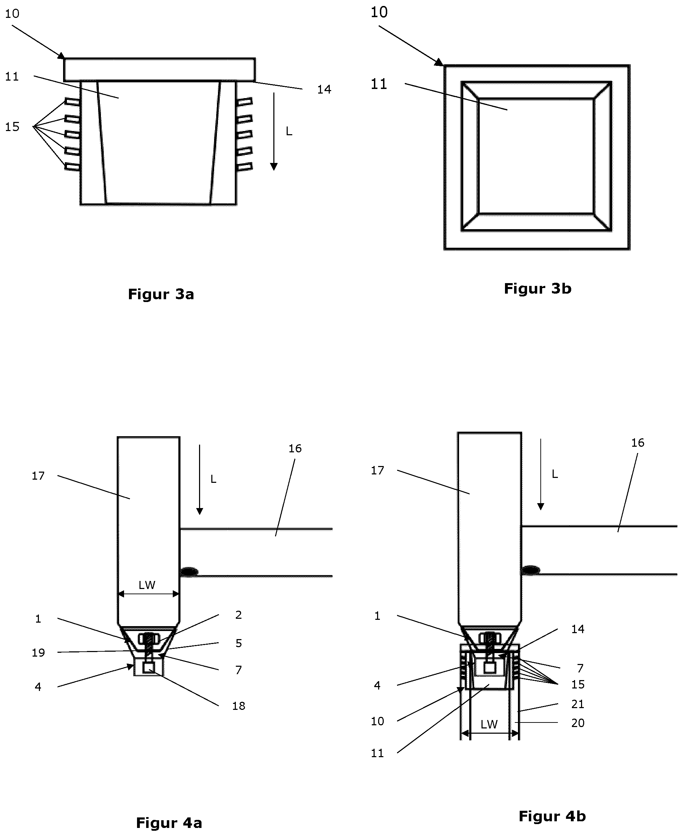

Die Figuren 3a und 3b zeigen eine Schutzhülse 10 einer Stapelsicherung eines erfindungsgemäßen Transportwagensystems. Die Schutzhülse 10 ist ein Hohlkörper mit quadratischem Querschnitt und bildet einen durchgehenden Hohlraum 11 mit quadratischem Querschnitt, der sich in Längsrichtung L leicht verjüngt. Ferner weist die Schutzhülse 10 an ihrem in Längsrichtung L gesehen hinteren Ende einen umlaufenden, nach außen gerichteten Kragen 14 auf. An den vier Außenwänden der Schutzhülse 10 sind jeweils vier untereinander angeordnete und schräg zu einer zur Längsrichtung L senkrechten Ebene verlaufende Lamellen 15 angeordnet.

Die Figuren 4a und 4b zeigen verschiedene Ausschnitte eines erfindungsgemäßen Transportwagensystems mit Stapelsicherung. In Figur 4a ist ein Eckteil eines Transportbodens 16 dargestellt, der im Wesentlichen wie der Eckteil eines Wagens eines CC-Containers mit einer senkrecht zu einer Ebene des Transportbodens 16 verlaufenden Stützhülse mit quadratischem Querschnitt und einer inneren lichten Weite LW aufgebaut ist. Am unteren Ende 19 läuft die Stützhülse pyramidenartig spitz zu, so dass der Innenquerschnitt der Stützhülse enger wird. Das pyramidenartig spitz zulaufende untere Ende 19 der Stützhülse bildet damit eine Querschnittsverengung, und die Stützhülse ist somit eine erste Hülse 17 entsprechend der Definition der vorliegenden Erfindung.

Auf dem unteren Ende 19 der ersten Hülse 17 sitzt ein von oben in die erste Hülse 17 eingesetzter Befestigungseinsatz 1, wie er in den Figuren 1a und 1b dargestellt ist, und liegt dabei mit seiner Unterseite vollständig auf dem unteren Ende 19 der ersten Hülse 17 auf. Von unten an das untere Ende 19 der ersten Hülse 17 angesetzt ist ein Verlängerungsstück 4, wobei das untere Ende 19 der ersten Hülse 17 in den Hohlraum 7 des ersten Verlängerungsstückabschnitt 5 eingesetzt ist. Das Verlängerungsstück 4 ist mit einer Schraube 18, die von unten durch das Verlängerungsstück 4 und den Befestigungseinsatz 1 hindurchgeführt und in die Mutter 2 eingeschraubt ist, fest mit dem Befestigungseinsatz 1 verbunden, wobei das untere Ende 19 der ersten Hülse 17 zwischen dem Befestigungseinsatz 1 und dem Verlängerungsstück 4 liegt und die Stapelsicherung in der ersten Hülse 17 verankert ist. Während die Außenkontur des Befestigungseinsatzes 1 der Innenkontur des unteren Endes 19 der ersten Hülse 17 entspricht, ist die Außenkontur des Verlängerungsstücks 4 weniger spitz zulaufend. Im Ergebnis wird das untere Ende 19 der ersten Hülse 17 durch die Stapelsicherung nicht nur verlängert, es wird auch die Form des Teils verändert, der zum Stapeln in die zweite Hülse eines weiteren Modulelements eingesetzt werden soll. Insbesondere für den Fall, dass das Verlängerungsstück direkt in eine zweite Hülse eines weiteren Modulelements eingesetzt werden soll, die eine einfache Öffnung eines langgestreckten Hohlprofils ist, kann damit auch eine Keilwirkung des in der zweiten Hülse sitzenden Verlängerungsstücks 4 verbessert werden.

Figur 4b zeigt zusätzlich zu den in Figur 4a dargestellten Elementen die in den Figuren 3a und 3b dargestellte Schutzhülse 10, die in die obere Öffnung einer zweiten Hülse 20 des Transportwagensystems eingesteckt ist und mit ihrem Kragen 14 am oberen Rand der zweiten Hülse 20 anliegt. Die zweite Hülse 20 kann die Schutzhülse eines weiteren Transportbodens oder auch ein Pfosten sein, dessen Oberseite als Hülse ausgebildet ist und der beispielsweise an einem darunter liegenden weiteren Transportboden befestigt ist. In Figur 4b ist ferner zu sehen, dass die Außenkontur des Verlängerungsstücks 4 und die Innenkontur des Hohlraums 11 der Schutzhülse 10 miteinander korrespondieren, so dass ein optimaler Halt des Verlängerungsstücks 4 in der Schutzhülse 10 gegeben ist.

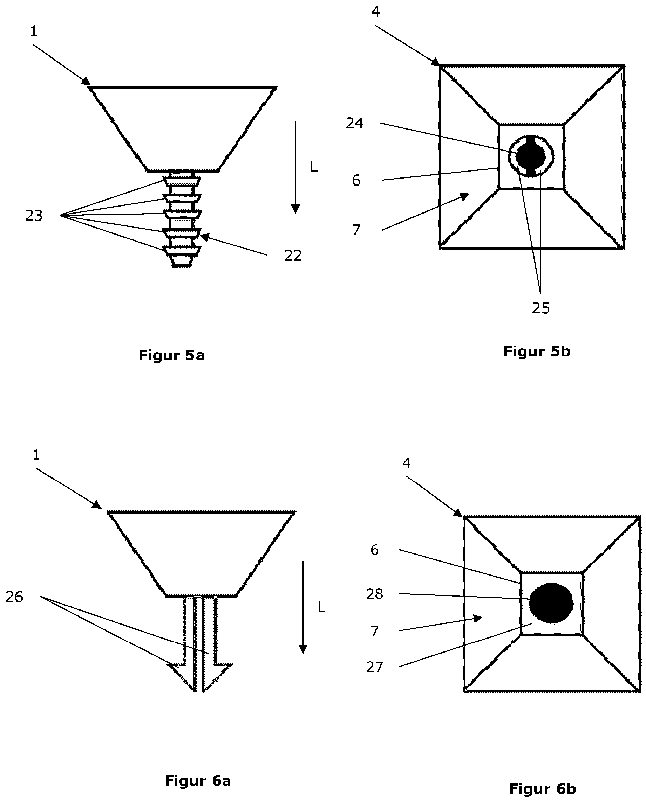

Die Figuren 5a und 5b zeigen den Befestigungseinsatz 1 und das Verlängerungsstück 4 mit einem Verbindungsmittel in einer zweiten Ausführung. Wie in Figur 5a zu sehen ist, umfasst das Verbindungsmittel einen am Befestigungseinsatz 1 angeordneten Befestigungsdübel 22, der in Längsrichtung L insgesamt fünf in Längsrichtung L voneinander beabstandete und umlaufende Lamellen 23 aufweist. In Figur 5b ist ferner zu sehen, dass das Verbindungsmittel darüber hinaus eine in dem zweiten Verlängerungsstückabschnitt 6 ausgebildete Öffnung 24 aufweist, wobei in der Öffnung 24 zwei halbkreisförmige Spreizelemente 25 vorgesehen sind. Zur Verbindung von Befestigungseinsatz 1 und Verlängerungsstück 4 wird der Befestigungsdübel 22 durch die Öffnung 24 eingeführt, sodass eine kraft- und formschlüssige Verbindung zwischen Befestigungseinsatz 1 und Verlängerungsstück 4 hergestellt werden kann.

Die Figuren 6a und 6b zeigen den Befestigungseinsatz 1 und das Verlängerungsstück 4 mit einem Verbindungsmittel in einer dritten Ausführung. In Figur 6a ist zu erkennen, dass das Verbindungsmittel zwei zumindest teilweise elastisch verformbare Rastelemente in Form von Haken 26 aufweist. Die Haken 26 sind senkrecht zur Längsrichtung L voneinander beabstandet am Befestigungseinsatz 1 angeordnet, sodass diese bei entsprechender Krafteinwirkung aufeinander zu gebogen werden können. In Figur 5b ist zu sehen, dass das Verbindungsmittel ferner eine im zweiten Verlängerungsstückabschnitt 6 ausgebildete Wandung 27 mit einer Öffnung 28 aufweist. Zur Verbindung von Befestigungseinsatz 1 und Verlängerungsstück 4 miteinander werden die Haken 26 in die Öffnung 28 eingeführt, sodass diese die Wandung 27 hintergreifen und eine formschlüssige Verbindung hergestellt wird.

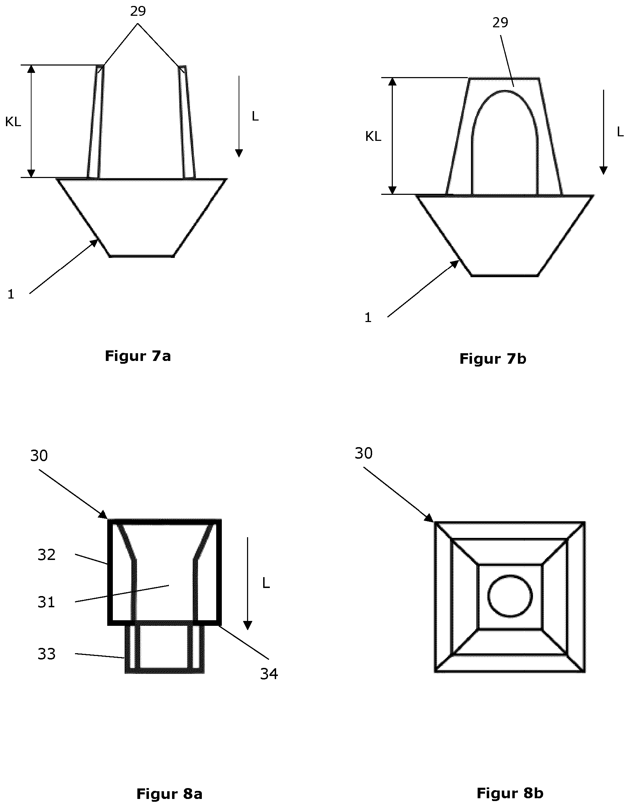

Die Figuren 7a und 7b zeigen den Befestigungseinsatz 1 in einer Ausführungsform mit zwei Kippschutzelementen 29. Wie in Figur 7a zu sehen ist, sind die beiden Kippschutzelemente 29 senkrecht zur Längsrichtung L beabstandet zueinander angeordnet und leicht schräg zur Längsrichtung L ausgerichtet. In Figur 7b ist zu sehen, dass die Kippschutzelemente 29 bogenförmig ausgeführt sind. Die Kippschutzelemente 29 weisen in Längsrichtung L jeweils eine Länge KL auf, die größer als die lichte Weite LW der ersten Hülse 17 ist. Die Kippschutzelemente 29 verhindern, dass sich der Befestigungseinsatz 1 beim Einsetzen in die erste Hülse 17 in Einsetzrichtung senkrecht zur Längsrichtung L verdreht, so dass er problemlos in der in Figur 4 gezeigten Ausrichtung in der ersten Hülse 17 verankert werden kann.

Die Figuren 8a und 8b zeigen ein Ausgleichsmittel 30 einer Stapelsicherung eines erfindungsgemäßen Transportwagensystems. Insbesondere in der Zusammenschau von Figur 8a und 8b wird deutlich, dass das Ausgleichsmittel 30 ähnlich wie die Schutzhülse der Figuren 3a und 3b senkrecht zur Längsrichtung L eine quadratische Innenkontur und Außenkontur aufweist. Wie in Figur 8a zu sehen ist, ist in dem Ausgleichsmittel 30 in Längsrichtung L ein Hohlraum 31 ausgebildet. Die Innenkontur des Hohlraums 31 ist derart korrespondierend zur Außenkontur eines Verlängerungsstücks 4 ausgeführt, dass das Verlängerungsstück 4 passgenau in den Hohlraum 31 eingesetzt werden kann. Ferner weist das Ausgleichsmittel 30 einen ersten Ausgleichsmittelabschnitt 32 und einen von diesem in Längsrichtung L beabstandeten zweiten Ausgleichsmittelabschnitt 33 auf. Die Außenkontur des zweiten Ausgleichsmittelabschnitts 33 korrespondiert mit einer Innenkontur einer zweiten Hülse 20 oder dem Hohlraum 11 einer Schutzhülse 10, so dass das Ausgleichsmittel 30 mit dem zweiten Ausgleichsmittelabschnitt 33 in eine zweite Hülse 20 oder den Hohlraum 11 einer Schutzhülse eingesetzt werden kann. An dem Übergang zwischen dem ersten Ausgleichsmittelabschnitt 32 und dem zweiten Ausgleichsmittelabschnitt 33 ist ein Kragen 34 ausgebildet, mit dem das Ausgleichsmittel 30 an der zweiten Hülse 20 oder der Schutzhülse 10 anliegen kann.

### Bezugszeichenliste

| | | | |
|---|---|---|---|
| 1 | Befestigungseinsatz | 33 | zweiter Ausgleichsmittelabschnitt |
| 2 | Mutter | 34 | Kragen |
| 3 | Unterseite | L | Längsrichtung |
| 4 | Verlängerungsstück | LW | lichte Weite |
| 5 | erster Verlängerungsstückabschnitt | KL | Länge des Kippschutzelements |
| 6 | zweiter Verlängerungsstückabschnitt | | |
| 7 | Hohlraum | | |
| 8 | Öffnung | | |
| 10 | Schutzhülse | | |
| 11 | Hohlraum | | |
| 14 | Kragen | | |
| 15 | Lamellen | | |
| 16 | Transportboden | | |
| 17 | erste Hülse | | |
| 18 | Schraube | | |
| 19 | unteres Ende | | |
| 20 | zweite Hülse | | |
| 22 | Lamellendübel | | |
| 23 | Lamellen | | |
| 24 | Öffnung | | |
| 25 | Spreizelemente | | |
| 26 | Haken | | |
| 27 | Wandung | | |
| 28 | Öffnung | | |
| 29 | Kippschutzelemente | | |
| 30 | Ausgleichsmittel | | |
| 31 | Hohlraum | | |
| 32 | erster Ausgleichsmittelabschnitt | | |

## Patentansprüche

1. Transportwagensystem für einen aus Modulelementen zusammengesetzten Transportwagen, insbesondere für einen Transportwagen zum Transport von Pflanzen, mit mindestens einem ersten Transportboden (16), mindestens einem weiteren Modulelement und mindestens einer Stapelsicherung, wobei am ersten Transportboden (16) mehrere Stützhülsen, insbesondere senkrecht zur Ebene des ersten Transportbodens (16), angeordnet sind, von denen mindestens eine erste Hülse (17) einen lichten Querschnitt mit einer Querschnittsverengung aufweist und die Querschnittsverengung von einer Öffnung der ersten Hülse (17) aus hintergreifbar ist, wobei das mindestens eine weitere Modulelement mindestens eine zweite Hülse (20) aufweist, und wobei die Stapelsicherung mit der ersten Hülse (17) des ersten Transportbodens und der zweiten Hülse (20) des weiteren Modulelements zusammenwirkt, **dadurch gekennzeichnet, dass** die Stapelsicherung einen Befestigungseinsatz (1) und ein damit verbundenes Verlängerungsstück (4) aufweist, wobei die Stapelsicherung in der ersten Hülse (17) verankert ist, wobei zumindest ein Teil des Befestigungseinsatzes (1) die Querschnittsverengung hintergreift, und wobei das mit dem Befestigungseinsatz (1) verbundene Verlängerungsstück (4) ausgebildet ist, in die zweite Hülse (20) eingesetzt zu werden.

2. Transportwagensystem nach Anspruch 1, **dadurch gekennzeichnet, dass** mindestens eines der weiteren Modulelemente ein weiterer Transportboden ist, wobei der weitere Transportboden zu dem ersten Transportboden (16) vorzugsweise im Wesentlichen identisch ist.

3. Transportwagensystem nach Anspruch 1 oder 2, **dadurch gekennzeichnet, dass** der erste Transportboden Transportrollen aufweist.

4. Transportwagensystem nach einem der vorstehenden Ansprüche, **dadurch gekennzeichnet, dass** mindestens eines der weiteren Modulelemente ein Pfosten ist, der mit den Stützhülsen zweier Transportböden (16) verbunden werden kann.

5. Transportwagensystem nach einem der vorstehenden Ansprüche, **dadurch gekennzeichnet, dass** eine Außenkontur des Befestigungseinsatzes (1) und eine Innenkontur des Verlängerungsstücks (4) derart korrespondierend zueinander ausgebildet sind, dass der Befestigungseinsatz (1) in das Verlängerungsstück (4) eingreifen kann.

6. Transportwagensystem nach einem der vorstehenden Ansprüche, **dadurch gekennzeichnet, dass** der Befestigungseinsatz (1) in zumindest einem Befestigungseinsatzabschnitt eine Außenkontur aufweist, die im Wesentlichen einer Innenkontur der ersten Hülse (17) im Bereich der Querschnittsverengung entspricht und vorzugsweise drei- oder mehreckig und insbesondere quadratisch ist.

7. Transportwagensystem nach Anspruch 6, **dadurch gekennzeichnet, dass** sich die Außenkontur des Befestigungseinsatzes (1) zumindest innerhalb eines Abschnitts in Richtung einer Einsetzrichtung verjüngt, wobei der Befestigungseinsatz an seinem in Einsetzrichtung vorderen Ende vorzugsweise die Form eines Pyramidenstumpfes hat.

8. Transportwagensystem nach einem der vorstehenden Ansprüche, **dadurch gekennzeichnet, dass** das Verlängerungsstück (4) an seinem dem Befestigungseinsatz (1) zugewandten Ende eine Innenkontur aufweist, die im Wesentlichen zumindest eines Teils einer Außenkontur des Befestigungseinsatzes (1) und/oder eines der zweiten Hülse (20) zugewandten Endes (19) der ersten Hülse (17) entspricht.

9. Transportwagensystem nach einem der vorstehenden Ansprüche, **dadurch gekennzeichnet, dass** das Verlängerungsstück (4) in einem ersten Verlängerungsstückabschnitt (5) eine Außenkontur aufweist, die sich zumindest teilweise in Richtung zum Einsetzen in eine zweite Hülse (20) verjüngt und insbesondere die Form eines Pyramidenstumpfes aufweist.

10. Transportwagensystem nach einem der vorstehenden Ansprüche, **dadurch gekennzeichnet, dass** das Verlängerungsstück (4) einen zweiten Verlängerungsstückabschnitt (6) aufweist, der dem ersten Verlängerungsstückabschnitt (5) ausgehend von dem Befestigungseinsatz (1) in Längsrichtung (L) nachgeordnet ist und dessen maximales Außenmaß senkrecht zur Längsrichtung (L) geringer als eine lichte Weite (LW) der zweiten Hülse (20) ist, wobei es im zweiten Verlängerungsstückabschnitt (6) entlang der Längsrichtung (L) vorzugsweise eine gleichbleibende Außenkontur aufweist.

11. Transportwagensystem nach einem der vorstehenden Ansprüche, **dadurch gekennzeichnet, dass** der Befestigungseinsatz (1) mindestens ein längliches Kippschutzelement (29) aufweist, dessen Länge (KL) größer als eine lichte Weite (LW) der ersten Hülse (17) ist, wobei das Kippschutzelement (29) insbesondere bogenförmig ausgebildet ist.

12. Transportwagensystem nach einem der vorstehenden Ansprüche, **dadurch gekennzeichnet, dass** ein Bestandteil der Stapelsicherung eine Schutzhülse (10) aufweist, die in die zweite Hülse eingesetzt wird, wobei eine Innenkontur der Schutzhülse (10) und eine Außenkontur des Verlängerungsstücks (4) derart zueinander korrespondierend ausgebildet sind, dass das Verlängerungsstück (4) in die Schutzhülse (10) eingesetzt werden kann.

13. Transportwagensystem nach Anspruch 12, **dadurch gekennzeichnet, dass** die Schutzhülse (10) in einer Längsrichtung (L) einen Hohlraum (11) aufweist.

14. Transportwagensystem nach Anspruch 12 oder 13, **dadurch gekennzeichnet, dass** an mindestens einer äußeren Wand der Schutzhülse (10), insbesondere an allen äußeren Wänden, zumindest eine Lamelle (15) angeordnet ist, wobei an der mindestens einen äußeren Wand insbesondere mehrere Lamellen (15) in Längsrichtung (L) voneinander beabstandet angeordnet sind.

15. Transportwagensystem nach einem der Ansprüche 12 bis 14, **dadurch gekennzeichnet, dass** die Schutzhülse (10) in die zweite Hülse (20) einsteckbar ist, wobei die Schutzhülse (10) einen Kragen (14) aufweist, mit dem sie im eingesteckten Zustand an einer Öffnung der zweiten Hülse (20) anliegen kann.
